# EUROPEAN PATENT SPECIFICATION

(11) **EP 2 802 483 B1**
(45) Date of publication and mention of the grant of the patent: **13.11.2019**
(21) Application number: 13710057.4
(22) Date of filing: 09.01.2013
(51) Int. Cl.: B60P 1/43, B60P 3/075, B60P 3/12

(54) **DEVICE FOR THE ENTRY AND EXIT OF MOTORCYCLES WITH TWO OR MORE WHEELS**
VORRICHTUNG ZUM HEREIN- UND HERAUSFAHREN VON MOTORRÄDERN MIT ZWEI ODER MEHR RÄDERN
DISPOSITIF SERVANT À FAIRE ENTRER ET SORTIR DES MOTOCYCLES À DEUX OU PLUSIEURS ROUES

(30) Priority: 12.01.2012 IT TV20120004
(43) Date of publication of application: 19.11.2014
(73) Proprietor: Trabuio, Domenico, 31032 Casale Sul Sile (TV) (IT)
(72) Inventor: Trabuio, Domenico, 31032 Casale Sul Sile (TV) (IT)
(74) Representative: Osti, Biancamaria
(86) International application number: PCT/IT2013/000008
(87) International publication number: WO 2013/105122

(56) References cited:
- WO-A1-2008/153991
- DE-U1-202010 013 520
- US-A- 5 649 803
- US-A- 5 730 577
- US-A1- 2007 122 259
- US-B1- 7 381 019

## Description

The invention consists of a device which allows motorcycles with two or more wheels to easily enter and exit any larger vehicle within which they are transported.

The device can be used on camper vans, trucks, vans and so on. It is an entirely mechanical system consisting of metal rail and an engine which will facilitate the loading and unloading of motorcycles into and out of any other vehicle within which they are transported.

The invention is defined by the subject-matter of claim 1.

### DESCRIPTION OF RELATED ART

The only known patent in prior art is patent no. 5649803 assigned to Mr. Gary R. Bennett from Tulsa, Oklahoma, registered on 22 July 1997. Said patent works with a gear rack; it is heavy and not flexible, unlike our device that uses a belt or chain.

There exist other ways of loading and unloading motorcycles inside garages, camper vans or onto vehicles within which they are transported. These systems are manual, mechanical or electrical:
- Manual ramp for loading vehicles with the help of two or more people. One person pushes the vehicle from the outside and keeps it steady while the other drives the vehicle itself;
- Carriage fixed onto the front wheel of the motorcycle and pushed along a ramp which guides the carriage itself into the camper storage area or inside the truck.
- Manually operated system employing more than one person. The loading ramp is fitted onto rails with bearings. Once the front wheel of the vehicle has reached the inside of the camper van or truck, it is pulled in by a person situated inside, while at the same time being pushed by a person outside.
- System which uses an electric winch and harnesses the front part or the handlebars of the motorcycle, procedure that may damage or dent the bodywork. The motorcycle is then pulled up the ramp inside the camper van or truck. This system is also only employed for loading vehicles onto trucks and camper vans, and cannot be used for unloading purposes.
- System with rails mounted onto a loading ramp along which motorcycles are pulled up by means of an electric winch and by fixing the tow cable onto the handlebars of the motorcycle itself.
- System with guide rails for a hoisting ramp fitted onto a gear rack. Said system is driven by an electric engine which hoists and lowers the upright motorcycle outside the camper van until it is well inside the van.

The above systems are rather complicated and laborious as they require more people to assist with the loading of motorcycles; some of them can also damage or break parts of the motorcycle since the harness is placed directly onto bodywork or handlebars, and can be dangerous for the user.

The invention herein presented fulfills the ergonomic, economic and market requirements and avoids the drawbacks illustrated above.

The invention can be used for camper vans, trucks, and any other vehicle therefore it neither has any weight or size limitations nor does it present any of the safety issues of the existing manual and electrically operated devices. Since it can be used on any type of camper van and truck, it also avoids issues linked to both storage of motorcycles and production of certain standard sizes of camper vans and trucks.

### BRIEF DESCRIPTION OF THE DRAWINGS

The characteristics of the invention herein presented are clarified in the following description that provides a non-exhaustive example with reference to the attached drawings:
Table 1 illustrates the device in its entirety
Table 2 illustrates the main parts of the device

### TECHNICAL DESCRIPTION

The device is made up of a metal guiding rail (1) which guides the movement of a carriage (6). The said carriage is made up of one fixed bar and one mobile bar (respectively 14 and 7) which is compressed by two knobs (9) screwed onto a threaded bar (15) and a roller to keep the carriage flat.

Said bars (fixed and mobile) are tubular and inside them are fitted another two sliding bars (8) used to block the wheel of the vehicle, depending on its size.

A small threaded bar is placed along the mobile bar; this is tightened by a knob (10) to ensure that the blocked wheel does not roll backwards.

The forward/ backwards movement is operated by an electrically driven 12 V engine (2) which is fixed at the end of the rail and operates a chain or a belt (4) by means of a pinion (3). The chain or belt is in turn linked to a steel cable that runs outside the guiding rail (1). Said chain or belt is fixed onto the back of the carriage with a linkage, while the steel cable which passes over a pulley (13) is fixed onto the front part with a clamp (16).

### HOW IT WORKS

The loading or unloading of motorcycles with two or more wheels on various types of vehicles, for example camper vans, trucks, vans, pick-up trucks is carried out as follows: once the motorcycle has been positioned onto the access ramp of the truck or van, the front wheel is placed into the clamp of the device (6) and is blocked with the two knobs (9); a third safety knob screw is then tightened (10). The vehicle is now blocked and well-balanced. At this point, the engine of the device which is activated by an "up" switch, turns a pinion which pulls a chain or belt linked to a steel cable; the pinion itself rewinds the amount of travel required when the process is reverted by the "down" switch which turns the pinion in the opposite direction.

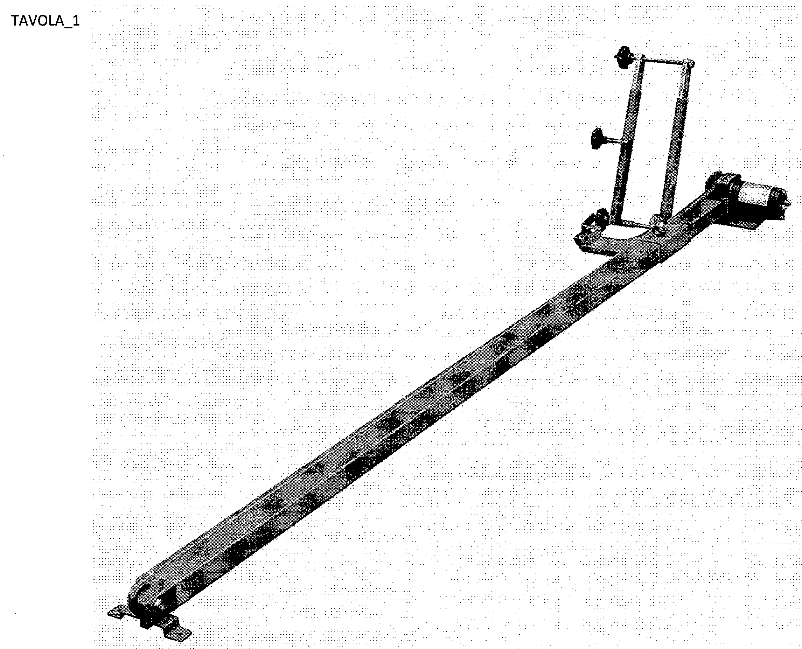

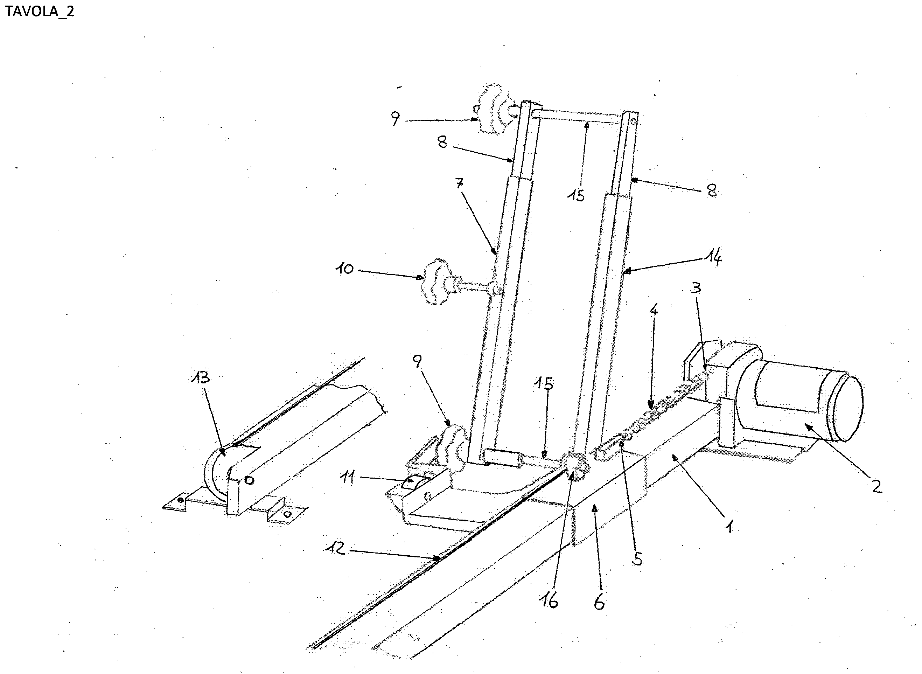

## Claims

1. Device for entry and exit of motorcycles with two or more wheels consisting of: a metal guiding rail (1), which guides a sliding clamp carriage (6) that includes two bars that block the front wheel of the motorcycle to be loaded, and an engine (2) which operates a pinion (3), **characterized in that** said pinion (3) is equipped with a chain or belt (4) which in turn is linked to a steel cable (12) that runs outside the guiding rail (1), which (1) is a bar acting as a supporting structure fitted with said clamp carriage (6) that slides along it, and which (1) also houses said chain or belt (4) and said steel cable (12) joined together; said chain or belt (4), attached to the back part to the clamp carriage (6) by a linkage (5); said guiding rail (1), with said engine (2) fitted onto an end, and with a pulley (13) fitted onto the opposite end; and where said engine (2), by means of said pinion (3), moves said chain or belt (4) connected with said steel cable (12) that runs inside said guiding rail (1), passes over said pulley (13) and returns outside said guiding rail (1) to be fixed onto the front part of said clamp carriage (6) with a cable - clamp (16); said two bars of the clamp carriage (6), being a fixed bar (14) and a movable clamping bar (7) constrained to said fixed bar (14), compressed by means of two knobs (9) which screw onto a threaded bar (15).

2. Device for loading and unloading motorcycles with two or more wheels as in previous claim 1), **characterized in that** said fixed bar (14) and movable clamping bar (7) have inside other two sliding bars (8), used to block the wheel depending on its size.

3. Device for loading and unloading motorcycles with two or more wheels as in previous claims 1), 2), **characterized in that** said clamp carriage (6) includes a roller (11) which ensures that the sliding clamp carriage (6) remains flat while moving along said guiding rail (1).

## Patentansprüche

1. Vorrichtung zum Herein und -Herausfahren von Motorrädern mit zwei oder mehr Rädern, bestehend aus: einer Metallführungsschiene (1), die einen verschiebbaren Klemmschlitten (6) führt, der zwei Stangen enthält, die das Vorderrad des zu beladenden Motorrades blockieren, und einen Antrieb (2), der ein Ritzel (3) antreibt, **dadurch gekennzeichnet, dass** das besagte Ritzel (3) mit einer Kette oder einem Riemen (4) ausgestattet ist, die bzw. der wiederum mit einem Stahlkabel (12) verbunden ist, das außerhalb der Führungsschiene (1) verläuft, welche (1) eine Stange ist, die als Tragkonstruktion dient und mit dem besagten Klemmschlitten (6) versehen ist, der entlang dieser gleitet, und welche (1) auch die besagte Kette oder den besagten Riemen (4) und das Stahlkabel (12) aufnimmt, die miteinander verbunden sind; wobei die besagte Kette oder der besagte Riemen (4) an dem hinteren Teil des Klemmwagens (6) durch eine Kopplung (5) befestigt sind; die besagte Führungsschiene (1), mit dem besagten Antrieb (2) an einem Ende angebracht ist und mit einer Scheibe (13) an dem gegenüberliegenden Ende angebracht ist; und wobei der besagte Antrieb (2) mittels des besagten Ritzels (3) die mit dem besagten Stahlseil (12) verbundene besagte Kette oder besagten Riemen (4) bewegt, die innerhalb der besagten Führungsschiene (1) verlaufen, über die Scheibe (13) läuft und außerhalb der besagten Führungsschiene (1) zurückkehrt, um mit einer Kabelklemme (16) am vorderen Teil des besagten Klemmwagens (6) befestigt zu werden; wobei die besagten zwei Stangen des Klemmwagens (6) eine feststehende Stange (14) und eine bewegliche Klemmstange (7) sind, die an der besagten feststehenden Stange (14) befestigt sind und mittels zweier Knöpfe (9) zusammengedrückt sind, die auf eine Gewindestange aufschrauben (15).

2. Vorrichtung zum Be- und Entladen von Motorrädern mit zwei oder mehr Rädern nach dem vorhergehenden Anspruch 1), **dadurch gekennzeichnet, dass** die besagte feststehende Stange (14) und die bewegliche Klemmstange (7) im Inneren zwei Gleitstangen (8) aufweisen, die dazu dienen, das Rad in Abhängigkeit von seiner Größe zu blockieren.

3. Vorrichtung zum Be- und Entladen von Motorrädern mit zwei oder mehr Rädern nach den vorhergehenden Ansprüchen 1), 2), **dadurch gekennzeichnet, dass** der besagte Klemmwagen (6) eine Rolle (11) enthält, die sicherstellt, dass der verschiebbare Klemmwagen (6) flach bleibt, während er sich entlang der besagten Führungsschiene (1) bewegt.

## Revendications

1. Dispositif pour l'entrée et la sortie de motocycles avec deux ou plusieurs roues comprenant: un rail de guidage en métal (1), qui guide un chariot d'attache coulissant (6) qui comprend deux barres qui bloquent la roue antérieure du motocycle à charger, et un moteur (2) qui actionne un pignon (3), **caractérisé en ce que** ledit pignon (3) est pourvu d'une chaîne ou courroie (4) qui à son tour est connectée à un câble en acier (12) qui roule à l'extérieur du rail de guidage (1), qui (1) est une barre agissant comme une structure de support pourvue dudit chariot d'attache (6) qui glisse le long de cela, et qui (1) contient également ladite chaîne ou courroie (4) et ledit câble en acier (12) joints ensemble; ladite chaîne ou courroie (4), attachée à la partie postérieure au chariot d'attache (6) par une connexion (5); ledit rail de guidage (1), avec ledit moteur (2) placé sur une extrémité, et avec une poulie (13) placée sur l'extrémité opposée; et où ledit moteur (2), au moyen dudit pignon (3), déplace ladite chaîne ou courroie (4) connectée audit câble en acier (12) qui roule dans ledit rail de guidage (1), passe au-dessus de ladite poulie (13) et retourne à l'extérieur dudit rail de guidage (1) pour être fixée sur la partie antérieure dudit chariot d'attache (6) avec un câble - attache (16); lesdites deux barres du chariot d'attache (6), étant une barre fixée (14) et une barre de serrage mobile (7) contrainte à ladite barre fixée (14), comprimée au moyen de deux boutons (9) qui se vissent sur une barre filetée (15).

2. Dispositif pour le chargement et le déchargement de motocycles avec deux ou plusieurs roues selon la revendication précédente 1), **caractérisé en ce que** ladite barre fixée (14) et barre de serrage mobile (7) ont à l'intérieur deux autres barres coulissantes (8), utilisées pour bloquer la roue selon sa dimension.

3. Dispositif pour le chargement et le déchargement de motocycles avec deux ou plusieurs roues selon les revendications précédentes 1), 2), **caractérisé en ce que** ledit chariot d'attache (6) comprend un rouleau (11) qui assure que le chariot d'attache coulissant (6) reste plat en se déplaçant le long dudit rail de guidage (1).
